# EUROPEAN PATENT SPECIFICATION

(11) **EP 2 031 846 B1**
(45) Date of publication and mention of the grant of the patent: **26.10.2011**
(21) Application number: 07017112.9
(22) Date of filing: 31.08.2007
(51) Int. Cl.: H04M 1/60, H04M 1/24

(54) **Method and apparatus for calibrating a telephone handsfree system**
Verfahren und Vorrichtung zur Kalibrierung einer Freisprechanlage
Procédé et appareil d'étalonnage d'un système téléphonique mains libres

(43) Date of publication of application: 04.03.2009
(73) Proprietor: Harman Becker Automotive Systems GmbH, 76307 Karlsbad (DE)
(72) Inventor: Schmidt, Gerhard Uwe, 89081 Ulm (DE); Kolano, Guido, 73084 Salach (DE)
(74) Representative: Grünecker, Kinkeldey, Stockmair & Schwanhäusser

(56) References cited:
- EP-A- 1 376 997
- EP-A- 1 883 213
- US-A1- 2006 111 154
- US-A1- 2007 033 030
- US-B1- 6 625 448

## Description

The invention is directed to a method and an apparatus for calibrating a telephone handsfree system.

In common telephone handsfree systems which may be provided, for example, in a vehicular cabin, a mobile phone by a user is connected to the handsfree system. This connection may be wireless, such as via a Bluetooth connection, or in a wired way such as by putting the mobile phone in a cradle comprising a plug connector for the mobile phone. With such handsfree systems, telephone signals received by the mobile phone are passed to the handsfree system such that the telephone signals from the distant speaker are output via a loudspeaker connected to the handsfree system; such a loudspeaker may be fixedly mounted in a vehicular cabin. Speech from the near speaker (e.g. the vehicle driver) is received by a microphone which may also be fixedly mounted in the vehicular cabin. These microphone signals are passed from the handsfree system to the mobile phone which, then, transmits the signals to the telephone of the distant speaker via a telephone connection.

In many mobile phones, a digital processing of the telephone signals is performed, particularly to compensate for signal distortions due to the internal microphone or loudspeaker. In view of this, some prior art handsfree systems are equipped with an equalizing unit in order to compensate for this digital processing within the mobile phone which otherwise might result, for example, in distorted signals output by the loudspeaker of the handsfree system due to the differing loudspeaker parameters.

In these prior art systems, once connected, the type of the mobile phone is identified by the handsfree system. Based on this information, the handsfree system loads corresponding equalizing parameters for this type of mobile phone that are to be used in the corresponding equalizing unit of the handsfree system. For this purpose, for different types of mobile phones, suitable equalizing parameters have been determined in advance and stored in the handsfree system.

This prior art has the drawback that, first of all, only a very global equalizing may be performed for a given type of mobile phone. However, as different mobile phones of the same type may show different characteristics (e.g. due to production tolerances), this method might still resultant in unwanted disturbances. Secondly, if the characteristics of a mobile phone are changed, e.g. due to a firmware update, this will not be taken into account. Thirdly, only those mobile phones may be used for equalizing for which the corresponding parameters have been known and stored in the handsfree system.

Document US 2007/0033030 discloses a method for measurement, adaptation and set-up of an audio communication system, whereby configuration of the system is performed by transmitting one or more predetermined reference signals into an acoustic environment, receiving the transmitted signals from the acoustic environment and adjusting at least one of a loudspeaker gain and microphone gain based on the characteristics of the received signal.

In view of the above, it is the object of the present invention to overcome some or all of these drawbacks and to provide a method and an apparatus for calibrating a telephone handsfree system in a more flexible and reliable way. This problem is solved by methods and apparatuses according to the appended claims.

Accordingly, a method of automatically calibrating a telephone handsfree system by a calibration apparatus is provided, wherein a signal processing means for processing a received telephone signal to be output via the handsfree system is provided, and wherein the calibration apparatus is configured such that a first and a second telephone are connectable to the calibration apparatus, comprising the steps:
causing the first telephone to transmit a predetermined test signal to the second telephone via a telephone connection,
comparing the received test signal with a predetermined reference signal to determine a deviation of the received test signal from the reference signal, the received test signal having been received by the second telephone and being to be passed to the handsfree system, and
adapting the signal processing means based on the determined deviation.

As this method is now performed automatically by a calibration apparatus, there is no need to store any equalizing parameters in advance (although this still may be done) in order to achieve any equalization of an telephone signal in the handsfree system. Furthermore, an adaptation of the handsfree system to individual mobile phones, irrespective of whether the type of mobile phone is already known to the handsfree system, may be performed. With this method, thus, a telephone handsfree system is automatically calibrated with respect to incoming telephone signals.

The first and second telephones are directly connectable to the calibration apparatus, such as in a wireless (or cordless) or wired way; however, a telephone connection is not a direct connection in this sense. Thus, the connection between the telephones and the handsfree system, in particular, may be a wireless network connection (e.g. a wireless personal area network (WPAN) connection) such as Bluetooth, Wi-Fi or IrDA. Alternatively, the connection may be obtained in a wired way, such as via a plug connector.

A telephone handsfree system receives telephone signals via an input being connectable to the first and/or the second telephone, and outputs corresponding output signals (possibly after some signal processing) particularly, via a loudspeaker or a headset. The signal processing means may be arranged on a signal path within the telephone handsfree system between an input for receiving the telephone signal from a telephone and an output for outputting an output audio signal (e.g. to a loudspeaker or a headset).

The test signal and/or the reference signal may be an audio signal. The test signal and/or the reference signal may be a digital signal.

In particular, the signal processing means may be part of the handsfree system and/or of the calibration apparatus; in other words, the handsfree system and/or the calibration apparatus may comprise the signal processing means. The handsfree system may comprise the calibration apparatus.

In principle, the first and/or the second telephone may be a mobile phone. Alternatively, the first and/or the second telephone may be integrated or embedded in the handsfree system. In this case, the integrated telephone may be provided in the form of a corresponding telephone module, such as, a GSM module or a UMTS module. Such an integrated or embedded telephone which may be provided in the form of a network access device (NAD) has the advantage that the corresponding internal signal processing and/or transmission parameters are known and may be used as reference parameters for the calibrating method. As an alternative, the first telephone (which may be used as a reference telephone) may be provided in the form of a mobile phone, the internal signal processing parameters of which are known to the telephone handsfree system.

The test signal and/or the reference signal may be stored in the calibration apparatus and/or in the handsfree system. Such locally stored test signals and/or reference signals allow to quickly access these signals for processing. In such a case, in particular, the calibration apparatus may be part of the handsfree system.

Alternatively, the test signal and/or the reference signal may be stored in the first or second telephone, respectively.

The test signal may be a time-varying signal, in particular, a non-stationary signal. In principle, other test signals such as white noise may be used as well. In such a case, however, some coding schemes employed by the mobile phone might suppress these signals as unwanted disturbances. Thus, using non-stationary signals is particularly advantageous for such mobile phones.

In particular, the test signal may be a composite source signal, an artificial voice signal or a pseudo noise sequence. In the latter case, an additional, time-varying attenuator may be used to obtain a time-varying signal.

In principle, the reference signal may be based on the test signal in different ways. In particular, the test signal and the reference signal may be identical; this renders the implementation of the method very simple.

In the above described methods, the adapting step may be performed such that the deviation is reduced, particularly becomes minimal, according to a predetermined criterion. For this purpose, a suitably chosen distance measure for determining the deviation of the signals from each other may be taken.

The comparing step may comprise performing a correlation analysis based on the received test signal and the reference signal. In this way, delay time of the received test signal and reference signal may be compensated for. In this case, the method may further comprise compensating for a delay time of the received test signal and the reference signal.

The telephone handsfree system and/or the calibration apparatus may comprise the signal processing means. Thus, the signal processing means allows for compensating for signal processing and/or signal modifications within the second mobile phone. In particular, distortions of a received telephone signal may be compensated for.

In the previously described methods, the signal processing means may comprise an equalizing means and the adapting step may comprise adapting the equalizing means. In this way, the frequency response of the handsfree system may be optimized. In particular, the equalizing means may be adapted such that the deviation is reduced, particularly becomes minimal according to a predetermined criterion. Adapting the equalizing means may comprise adapting adjustment or calibration parameters of the equalizing means.

In the above described methods, the adapting step may comprise adapting a level control parameter of the signal processing means. Thus, a level correction is achieved. The level control parameter of the signal processing means allows for controlling (e.g. increasing or decreasing) the level of a received telephone signal, such as the received test signal. The comparing step may comprise comparing the power of the received test signal with a predetermined target level. The adapting of the level control parameter may be based on the power comparison step.

In the above described methods, the adapting step may comprise adapting a frequency response of the signal processing means. The comparing step may comprise determining a power density spectrum of the received test signal. The adapting of the frequency response may be based on the determined power density spectrum. Determining a power density spectrum may comprise determining a short time spectrum or performing an LPC analysis. The step of adapting a frequency response may be performed using a parametric method, e.g., using FIR or IIR filters, preferably of low order. In the step of adapting a frequency response, the maximum attenuation and/or the maximum amplification may be limited.

The step of adapting a frequency response of the signal processing means, in particular, may be performed after adapting a level control parameter of the signal processing means.

In the above described methods, the adapting step may comprise adapting an automatic amplification control of the signal processing means. The comparing step may comprise determining whether the second telephone provides an automatic amplification control. Then, the adapting step may be based on the result of the comparing step. In particular, if an automatic amplification control is detected for the second telephone, an automatic amplification control of the signal processing means may be switched off or deactivated. For this case, advantageously, a test signal showing a varying signal level may be used.

In the above described methods, the adapting step may comprise adapting a limiter or a noise suppression means of the signal processing means. The comparing step may comprise determining whether the second telephone provides a limiter or a noise suppression means. Then, the adapting step may be based on the result of the comparing step. In particular, a limiter or a noise suppression means is detected for the second telephone, a limiter or a noise suppression means being provided for by the signal processing means may be switched off or deactivated or, alternatively, adapted accordingly. For both cases, a suitable test signal may be chosen. For example, for detecting a limiter, a test signal having an amplitude corresponding to the overload level of the second telephone may be chosen. For detecting a noise suppression means, a test signal having a predetermined noise level is preferable.

The previously described methods may comprise the step of performing a bandwidth extension of a received telephone signal. The above methods may be used for a method of performing a bandwidth extension of a received telephone signal. Performing a bandwidth extension may comprise determining an extension signal for frequencies above an upper threshold frequency and/or below a lower threshold frequency.

The invention also provides a method for automatically calibrating a telephone handsfree system by a calibration apparatus, wherein the calibration apparatus is configured such that a first and a second telephone are connectable to the calibration apparatus, and wherein a signal processing means for processing an audio signal input via the handsfree system and to be transmitted telephonically by the second telephone is provided, comprising the steps:
causing the second telephone to transmit a predetermined test signal to the first telephone via a telephone connection,
comparing the received test signal with a predetermined reference signal to determine a deviation of the received test signal from the reference signal, the received test signal having been received by the first telephone, and
adapting the signal processing means based on the determined deviation.

With this method, advantageously, the telephone handsfree system is calibrated with respect to outgoing telephone signals. The present method may be combined with the above described methods for calibrating a telephone handsfree system with regard to incoming signals. In such a case, for example, the first and second telephones of the above described methods may correspond to the first and second telephones of the present method.

The present method for calibrating a telephone handsfree system with regard to outgoing signals may be configured as outlined above for the method for calibrating a telephone handsfree system with regard to incoming signals. For example, the test signal and/or the reference signal for the method for calibrating with respect to outgoing signals may be stored in the calibration apparatus. Furthermore, the test and/or the reference signals of both methods may be identical. As a further example, the comparing step and the adapting step of the method for calibrating with respect to outgoing signals may be configured as outlined above in the context of the method for calibrating with respect to incoming signals. However, even if both methods are implemented together, their respective configurations need not be the same.

In the above described methods, the signal processing means may be configured to perform a linear and/or a non-linear processing, particularly, equalizing, of a received telephone signal and/or a telephone signal to be transmitted.

The invention also provides a computer program product comprising one or more computer-readable media having computer-executable instructions for performing the steps of the above described methods, when run on a computer.

In addition, the invention provides a calibration apparatus for automatically calibrating a telephone handsfree system, wherein a signal processing means for processing a received telephone signal to be output via the handsfree system is provided and wherein the calibration apparatus is configured such that a first and a second telephone are connectable to the calibration apparatus, comprising:
causing means for causing the first telephone to transmit a predetermined test signal to the second telephone via a telephone connection,
comparing means for comparing the received test signal with a predetermined reference signal to determine a deviation of the received test signal from the reference signal, the received test signal having been received by the second telephone and being to be passed to the handsfree system, and
adapting means for adapting the signal processing means based on the determined deviation.

The calibration apparatus may be configured in such a way as to perform one or more of the above-identified methods. For example, the calibration apparatus may comprise storing means for storing the test signal and/or the reference signal. As another example, the comparing means may be configured to perform a correlation analysis of the received test signal and the reference signal.

As in the above described methods, determining a deviation may be based on a predetermined criterion, such as on a predetermined distance measure.

As in the above described methods, the signal processing means may be configured to perform a linear and/or a non-linear processing, particularly, equalizing, of a received telephone signal and/or a telephone signal to be transmitted.

The invention also provides a calibration apparatus for automatically calibrating a telephone handsfree system by a calibration apparatus, wherein the calibration apparatus is configured such that a first and a second telephone are connectable to the calibration apparatus, and wherein signal processing means for processing an audio signal input via the handsfree system and to be transmitted telephonically by the second telephone is provided, comprising:
causing means for causing the second telephone to transmit a predetermined test signal to the first telephone via a telephone connection,
comparing means for comparing the received test signal with a predetermined reference signal to determine a deviation of the received test signal from the reference signal, the received test signal having been received by the first telephone, and
adapting means for adapting the signal processing means based on the determined deviation.

Also in this case, the calibration apparatus may be configured such that some or all of the steps of the above described methods may be performed.

In addition, a telephone handsfree system comprising one of the above described calibration apparatuses is provided. In particular, the telephone handsfree system may comprise the above-identified signal processing means. In addition, the first telephone may be integrated or embedded in the handsfree system.

Further features and aspects of the invention will be described in the following with reference to the examples and the figures.
- Fig. 1: schematically illustrates the general structure of an example of a handsfree system;
- Fig. 2: schematically illustrates an example of a handsfree system comprising a calibration apparatus;
- Fig. 3: illustrates an example of a test signal;
- Fig. 4: schematically illustrates an example of a handsfree system comprising a calibration apparatus.

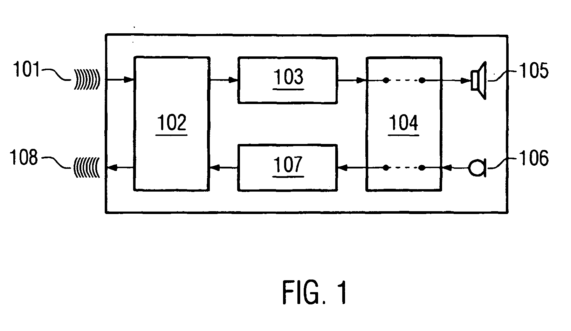

In Fig. 1, the general structure of an example of a handsfree system allowing to process incoming and outcoming signals is schematically illustrated. In the system shown in this Figure, incoming telephone signals 101 are received by mobile phone 102. A signal processing means 103 is provided for processing a received telephone signal to be output to a user. The part 104 is responsible for controlling the output of the handsfree system via a loudspeaker 105 and the input of received acoustic signals via a microphone 106. In prior art systems, the telephone handsfree system may essentially comprise the part 104.

Acoustic signals received via the microphone 106 are passed through signal processing means 107 which may also provide for an adaptation or equalization with respect to the mobile phone 102, via which a corresponding audio signal 108 is output and transmitted telephonically.

In common mobile phones, digital compensation filters may be provided to correct, for example, attenuations at low frequencies resulting from the mobile phone's loudspeaker due to its size. If such a mobile phone is used in a handsfree system as illustrated in Fig. 1, and if such a correction filter of the mobile phone is not deactivated, the signals output by the loudspeaker 105 will be heavy on the lower frequencies. To compensate for this effect, the signal processing means 103 may be adapted in a suitable way.

Correspondingly, the signal processing means 107 is responsible for compensating differences in the frequency response of the microphone of the mobile phone and the microphone 106 of the handsfree system.

In principle, the signal processing performed by signal processing means 103 and 107 may be linear or non-linear. According to prior art systems, the parameters used by the signal processing for equalizing have been stored in advance for different types of mobile phones.

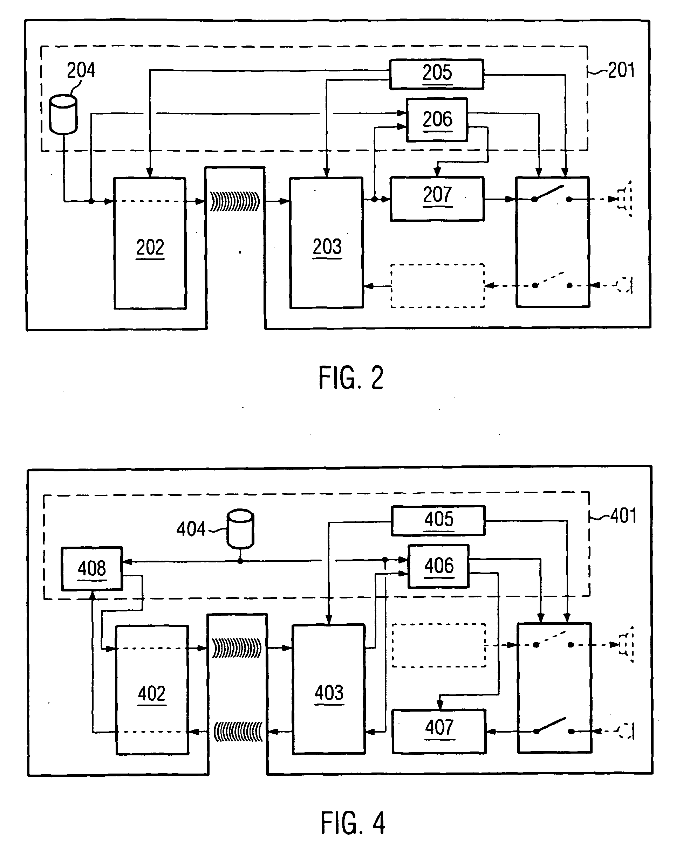

An example of a calibration system allowing to calibrate the telephone handsfree system with respect to individual mobile phones is illustrated in Fig. 2. In the illustrated system, a calibration apparatus 201 is provided. Furthermore, a first telephone 202 and a second telephone 203 are also provided which are connected to the calibration apparatus 201. In principle, the calibration apparatus 201 may be part of a handsfree system so that the telephones 202 and 203 may be connected to the handsfree system itself. This connection may be provided in a wireless or a wired way. For example, the connection may be achieved via a Bluetooth connection or via a plug connecter of a cradle for a mobile phone. In any case, the telephones are directly connected to the calibration apparatus and the handsfree system.

In the illustrated example, the calibration of the handsfree system is performed with respect to the second telephone 203 which may be a mobile phone. The first telephone may be integrated within the handsfree system and/or the calibration apparatus. For example, it may be an internal NAD (network access device), the internal signal transmission and/or processing parameters of which are known or predetermined. This first telephone may comprise an integrated GSM module (of course, other protocols such as UMTS may be used as well). Alternatively, the first telephone 202 may be a mobile phone with predetermined or known internal signal transmission and/or processing parameters. In any case, the first telephone 202 is used as a reference telephone.

The calibration method described in more detail below, may be performed automatically, each time a second telephone 203 is connected to the handsfree system. Alternatively, if a second telephone 203 is connected, a user may be informed and prompted whether he wishes to calibrate the handsfree system automatically.

In the calibration apparatus 201, a memory 204 is provided in which a test signal is stored. The calibration apparatus comprises a control part 205 comprising causing means for causing the first telephone 202 to transmit the predetermined test signal to the second telephone via a telephone connection. Preferably, a broadband and time-varying signal may be used. It is particularly useful to employ test signals which may be used by different coding schemes such as GSM or CDMA.

In principle, a possible test signal would be white noise. However, some coding schemes interpret such a signal as background noise and perform a corresponding attenuation. For this reason, non-stationary signals such as a composite source signal (as described, for example, in ITU-T recommendation P.501: Test Signals for use in Telephonometry, Geneva, Switzerland, 2000) or an artificial voice signal (as described, for example, in ITU-T recommendation P.50: Artificial Voice, Geneva, Switzerland, 1999) may form the test signal.

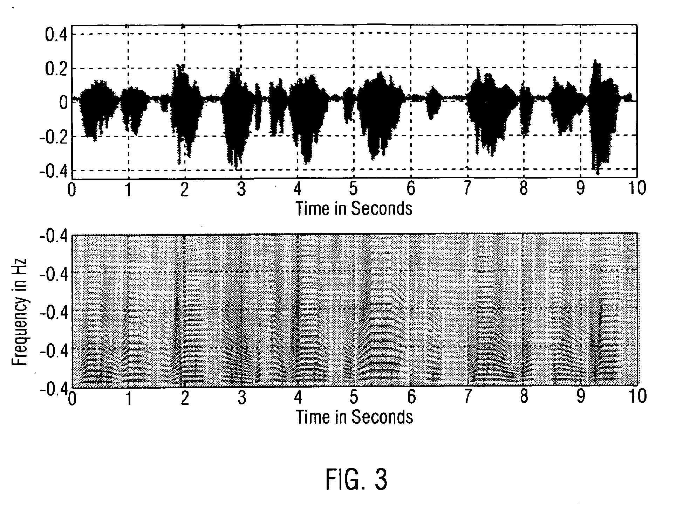

An example of an artificial voice signal is illustrated in Fig. 3. In the upper part of this Figure, the variation of this signal in time is shown, whereas in the lower part, a time/frequency analysis is depicted.

As an alternative to the above-mentioned signals, so-called pseudo noise sequences may be used as obtained using feedback shift registers. This type of signal is particularly useful in case of limited memory. Time variation of such a signal may be obtained using a subsequent, time-varying attenuator.

After the telephone signal has been received by the second telephone 203, a comparison is performed in the analysis part 206. The analysis part 206 comprises comparing means for comparing the received test signal with the reference signal. In particular, and as it is also illustrated in Fig. 2, the test signal and the reference signal may be identical.

In a first step, the received test signal and the reference signal may be adapted to each other with respect to delay times, for example, using a correlation analysis. After that, the received test signal and the reference signal are compared to determine one or more processing or equalizing parameters for the signal processing means 207.

For suitable compensation or equalization in the reception signal path (via signal processing means 207), first of all, a level correction may be performed. For this purpose, the level of the received signal (input level) may be compared (possibly after some averaging over time) with a predetermined target level. The level difference is then corrected by a level equalization using a corresponding level control parameter.

After such a level correction, an equalization of the reception frequency response may be performed. This may be done by determining the power density spectrum of the received telephone signal. Such a power density spectrum may be obtained by a temporal averaging of the short-time DFT spectra (so-called periodogram averaging, see, for example, K. D. Kammeyer et al, "Digitale Signalverarbeitung" Teubner-Verlag, 1998) or via an LPC analysis (see, for example, M.H. Hayes, "Statistical Digital Processing and Modelling", Wiley 1996). Particularly, in the latter case, the equalization may be performed via a parametric method using FIR or IIR filters of no order.

In both alternatives, preferably, the maximal attenuation and the maximal amplification is to be limited. For example, if a strong attenuation of the second telephone at low frequencies is to be corrected, without limitation of the attenuation, the internal noise of the system might increase, resulting in a poor audio quality.

Additionally, the calibration apparatus may determine whether the second telephone uses an automatic amplification control in the reception path. For this purpose, suitable test signals with levels varying by some dB may be used. If this level variation is compensated for after some tuning phase, this is an indication of an automatic amplification control in the second telephone 203. In such a case, a corresponding automatic amplification control in the handsfree system may be switched off.

Furthermore, the calibration apparatus may also detect whether a limiter is activated within the second telephone 203. For this purpose, a test signal having large amplitudes near the overload level may be employed. By comparing the signal-to-noise ratio of the received test signal and the reference signal, one can determine whether a limiter and the corresponding maximal attenuation is present. Depending on the result of this comparison, a limiter in the signal processing means 207 may be adapted accordingly. For example, if a maximal attenuation of 12 dB is desired and an attenuation by 8 dB is detected for the second telephone 203, the limiter being present in the signal processing means 207 may be adapted to a maximal attenuation of 4 dB.

Similarly, using a test signal with a predetermined noise level, the presence of a noise reduction means in the second telephone 203 may be detected, and a corresponding adaptation of the signal processing means may be performed.

The knowledge about the frequency response along the reception signal transmission path may also be used when extending the bandwidth of telephone band limited signals as received by the second telephone 203. When performing such an extension, an extension signal for frequency ranges below a lower threshold (such as the lower telephone band frequency, e.g. 200 Hz) and/or above an upper threshold (such as the upper telephone band frequency, e.g. 3400 Hz) is generated and added to a received telephone signal (see, for example, P. Jax; "Bandwidth Extension for Speech", in E. Larsen et al., Audio Bandwidth Extension, Wiley, 2004, pages 171 - 235). For better functioning of the estimation of the missing spectral components, is advantageous to know the frequency response of the second telephone. Then, it may be corrected so that speech models underlying the bandwidth extension better match any input data.

Alternatively, or additionally to the compensation or equalization in the reception signal path, a compensation or equalization in the transmission signal path may be performed as illustrated in the example shown in Fig. 4. The functioning of this system is analogous to the case of Fig. 2.

In particular, a first telephone 402 and a second telephone 403 are connected to a calibration apparatus 401 of a handsfree system. The calibration apparatus 401 causes the second telephone 403 to send or transmit a test signal to the first telephone 402 via a telephone connection.

Then, the test signal received by the first telephone 402 is compared to a reference signal in analysis part 408. The test signal and the reference signal may be identical and be stored in memory 404. The result of this analysis or comparison is used to adapt signal processing means 407 via analysis means 406. Control means 405 are used, for example, for causing the second telephone to transmit the test signal.

The compensation or equalization procedures performed by signal processing means 407 may be similar to those mentioned above. In particular, a level correction or equalization and/or a frequency response equalization may be performed. Furthermore, automatic amplification controls, limiters or noise reduction means may be detected and a corresponding adaptation of the signal processing means 407 may be performed.

In addition to a calibration with respect to the second telephone used by the handsfree system, a calibration or compensation with respect to individual mobile phone networks may be performed as well. In this case, the above described method steps are to be performed for a particular mobile phone network. The resulting parameters for the signal processing means in the reception signal path and/or the transmission signal path are to be stored together with an identification of the mobile phone network used. Then, during use of the calibrated handsfree system, the signal processing means may use the signal processing parameters determined for the mobile phone network actually in use. For example, different signal processing parameters may be available for UMTS and GSM networks.

It is to be understood that the above described features of the different apparatuses and systems may be combined in different ways. Furthermore, the above described embodiments are to be construed as exemplary only.

## Claims

1. Method for automatically calibrating a telephone handsfree system by a calibration apparatus (201), wherein a signal processing means (207) for processing a received telephone signal (101) to be output via the handsfree system is provided, and wherein the calibration apparatus is configured such that a first (202) and a second telephone (203) are directly connectable to the calibration apparatus, comprising the steps:
causing the first telephone (202) to transmit a predetermined digital test signal to the second telephone (203) via a telephone connection,
comparing the received digital test signal with a predetermined digital reference signal to determine a deviation of the received digital test signal from the digital reference signal, the received digital test signal having been received by the second telephone and being to be passed to the handsfree system, and
adapting the signal processing means based on the determined deviation.

2. Method according to claim 1, wherein the first telephone is integrated in the handsfree system.

3. Method according to one of the preceding claims, wherein the test signal and/or the reference signal is stored in the calibration apparatus and/or in the handsfree system.

4. Method according to one of the preceding claims, wherein the test signal is a time-varying signal, in particular, an non-stationary signal.

5. Method according to one of the preceding claims, wherein the test signal is a composite source signal, an artificial voice signal or a pseudo noise sequence.

6. Method according to one of the preceding claims, wherein the test signal and the reference signal are identical.

7. Method according to one of the preceding claims, wherein the comparing step comprises performing a correlation analysis based on the received test signal and the reference signal.

8. Method according to one of the preceding claims, wherein the signal processing means comprises an equalizing means and the adapting step comprises adapting the equalizing means.

9. Method according to one of the preceding claims, wherein the adapting step comprises adapting a level control parameter of the signal processing means.

10. Method according to one of the preceding claims, wherein the adapting step comprises adapting a frequency response of the signal processing means.

11. Method according to one of the preceding claims, wherein the adapting step comprises adapting an automatic amplification control of the signal processing means.

12. Method according to one of the preceding claims, wherein the adapting step comprises adapting a limiter or a noise suppression means of the signal processing means.

13. Method according to one of the preceding claims, comprising the step of performing a bandwidth extension of a received telephone signal.

14. Method according to one of the preceding claims, wherein the first and/or the second telephone is connected in a wireless or a wired way to the handsfree system.

15. Method for automatically calibrating a telephone handsfree system by a calibration apparatus (401), in particular, according to one of the preceding claims, wherein the calibration apparatus (401) is configured such that a first (402) and a second telephone (403) are directly connectable to the calibration apparatus, and wherein a signal processing means (407) for processing an audio signal input via the handsfree system and to be transmitted telephonically by the second telephone is provided, comprising the steps:
causing the second telephone (403) to transmit a predetermined digital test signal to the first telephone (402) via a telephone connection,
comparing the received digital test signal with a predetermined digital reference signal to determine a deviation of the received digital test signal from the digital reference signal, the received digital test signal having been received by the first telephone, and
adapting the signal processing means based on the determined deviation.

16. Computer program product comprising one or more computer readable media having computer-executable instructions for performing the steps of the method of one of the preceding claims when run on a computer.

17. Calibration apparatus (201) for automatically calibrating a telephone handsfree system, wherein a signal processing means (207) for processing a received telephone signal to be output via the handsfree system is provided, and wherein calibration apparatus is configured such that a first (202) and a second telephone (203) are directly connectable to the calibration apparatus, comprising:
causing means for causing the first telephone (202) to send a predetermined digital test signal to the second telephone (203) via a telephone connection,
comparing means (206) for comparing the digital received test signal with a predetermined digital reference signal to determine a deviation of the received digital test signal from the digital reference signal, the received digital test signal having been received by the second telephone and being to be passed to the handsfree system, and
adapting means for adapting the signal processing means based on the determined deviation.

18. Calibration apparatus (401) for automatically calibrating a telephone handsfree system by a calibration apparatus, in particular, according to one of the preceding claims, wherein the calibration apparatus is configured such that a first (402) and a second telephone (403) are directly connectable to the calibration apparatus, and wherein a signal processing means for processing an audio signal input via the handsfree system and to be transmitted telephonically by the second telephone is provided, comprising:
causing means for causing the second telephone (403) to transmit a predetermined digital test signal to the first telephone (402) via a telephone connection,
comparing means (408) for comparing the received digital test signal with a predetermined digital reference signal to determine a deviation of the received digital test signal from the digital reference signal, the received digital test signal having been received by the first telephone, and
adapting means for adapting the signal processing means based on the determined deviation.

19. Telephone handsfree system comprising a calibration apparatus according to claim 17 or 18.

20. Telephone handsfree system according to claim 19, wherein the first telephone is integrated in the handsfree system.

## Patentansprüche

1. Verfahren zum automatischen Kalibrieren eines Telefonfreisprechsystems durch eine Kalibriereinrichtung (201), wobei ein Signalverarbeitungsmittel (207) zum Verarbeiten eines empfangenen Telefonsignals (101) zur Ausgabe über das Freisprechsystem vorgesehen ist und wobei die Kalibriereinrichtung derart ausgestaltet ist, dass ein erstes (202) und ein zweites Telefon (203) direkt mit der Kalibriereinrichtung verbindbar sind, umfassend die nachfolgenden Schritte:
Veranlassen, dass das erste Telefon (202) ein vorbestimmtes digitales Testsignal an das zweite Telefon (203) über eine Telefonverbindung überträgt,
Vergleichen des empfangenen digitalen Testsignals mit einem vorbestimmten digitalen Bezugssignal zur Bestimmung einer Abweichung des empfangenen digitalen Testsignals von dem digitalen Bezugssignal, wobei das empfangene digitale Testsignal von dem zweiten Telefon empfangen worden ist und an das Freisprechsystem geleitet werden soll, und
Anpassen des Signalverarbeitungsmittels auf Grundlage der vorbestimmten Abweichung.

2. Verfahren nach Anspruch 1, wobei das erste Telefon in das Freisprechsystem integriert ist.

3. Verfahren nach einem der vorhergehenden Ansprüche, wobei das Testsignal und/oder das Bezugssignal in der Kalibriereinrichtung und/oder in dem Freisprechsystem gespeichert ist.

4. Verfahren nach einem der vorhergehenden Ansprüche, wobei das Testsignal ein zeitlich veränderliches Signal, insbesondere ein nichtstationäres Signal ist.

5. Verfahren nach einem der vorhergehenden Ansprüche, wobei das Testsignal ein Signal mit zusammengesetzter Quelle, ein Signal mit künstlicher Stimme oder eine Pseudorauschsequenz ist.

6. Verfahren nach einem der vorhergehenden Ansprüche, wobei das Testsignal und das Bezugssignal identisch sind.

7. Verfahren nach einem der vorhergehenden Ansprüche, wobei der Vergleichsschritt ein Durchführen einer Korrelationsanalyse auf Grundlage des empfangenen Testsignals und des Bezugssignals umfasst.

8. Verfahren nach einem der vorhergehenden Ansprüche, wobei das Signalverarbeitungsmittel ein Entzerrungsmittel umfasst und der Anpassschritt ein Anpassen des Entzerrungsmittels umfasst.

9. Verfahren nach einem der vorhergehenden Ansprüche, wobei der Anpassschritt ein Anpassen eines Pegelsteuerparameters des Signalverarbeitungsmittels umfasst.

10. Verfahren nach einem der vorhergehenden Ansprüche, wobei der Anpassschritt ein Anpassen einer Frequenzantwort des Signalverarbeitungsmittels umfasst.

11. Verfahren nach einem der vorhergehenden Ansprüche, wobei der Anpassschritt ein Anpassen einer automatischen Verstärkungssteuerung des Signalverarbeitungsmittels umfasst.

12. Verfahren nach einem der vorhergehenden Ansprüche, wobei der Anpassschritt ein Anpassen eines Begrenzers oder eines Rauschunterdrückungsmittels des Signalverarbeitungsmittels umfasst.

13. Verfahren nach einem der vorhergehenden Ansprüche, umfassend den Schritt des Durchführens einer Bandbreitenerweiterung eines empfangenen Telefonsignals.

14. Verfahren nach einem der vorhergehenden Ansprüche, wobei das erste und/oder das zweite Telefon auf drahtlose oder drahtgebundene Weise mit dem Freisprechsystem verbunden ist.

15. Verfahren zum automatischen Kalibrieren eines Telefonfreisprechsystems durch eine Kalibriereinrichtung (401) insbesondere nach einem der vorhergehenden Ansprüche, wobei die Kalibriereinrichtung (401) derart ausgestaltet ist, dass ein erstes (402) und ein zweites Telefon (403) direkt mit der Kalibriereinrichtung verbindbar sind und wobei ein Signalverarbeitungsmittel (407) zum Verarbeiten eines Audiosignals aus der Eingabe über das Freisprechsystem und zur telefonischen Übertragung durch das zweite Telefon vorgesehen ist, umfassend die nachfolgenden Schritte:
Veranlassen, dass das zweite Telefon (403) ein vorbestimmtes digitales Testsignal an das erste Telefon (402) über eine Telefonverbindung überträgt,
Vergleichen des empfangenen digitalen Testsignals mit einem vorbestimmten digitalen Bezugssignal zur Bestimmung einer Abweichung des empfangenen digitalen Testsignals von dem digitalen Bezugssignal, wobei das empfangene digitale Testsignal von dem ersten Telefon empfangen worden ist, und
Anpassen des Signalverarbeitungsmittels auf Grundlage der vorbestimmten Abweichung.

16. Computerprogrammerzeugnis, umfassend ein oder mehrere computerlesbare Medien mit computerausführbaren Anweisungen zur Durchführung der Schritte des Verfahrens nach einem der vorhergehenden Ansprüche bei Ausführung auf einem Computer.

17. Kalibriereinrichtung (201) zum automatischen Kalibrieren eines Telefonfreisprechsystems, wobei ein Signalverarbeitungsmittel (207) zum Verarbeiten eines empfangenen Telefonsignals zur Ausgabe über das Freisprechsystem vorgesehen ist und wobei eine Kalibriereinrichtung derart ausgestaltet ist, dass ein erstes (202) und ein zweites Telefon (203) direkt mit der Kalibriereinrichtung verbunden sind, umfassend:
Veranlassungsmittel zum Veranlassen, dass das erste Telefon (202) ein vorbestimmtes digitales Testsignal an das zweite Telefon (203) über eine Telefonverbindung sendet,
Vergleichsmittel (206) zum Vergleichen des digitalen empfangenen Testsignals mit einem vorbestimmten digitalen Bezugssignal zur Bestimmung einer Abweichung des empfangenen digitalen Testsignals von dem digitalen Bezugssignal, wobei das empfangene digitale Testsignal von dem zweiten Telefon empfangen worden ist und an das Freisprechsystem geleitet werden soll, und
Anpassmittel zum Anpassen des Signalverarbeitungsmittels auf Grundlage der vorbestimmten Abweichung.

18. Kalibriereinrichtung (401) zum automatischen Kalibrieren eines Telefonfreisprechsystems durch eine Kalibriereinrichtung insbesondere nach einem der vorhergehenden Ansprüche, wobei die Kalibriereinrichtung derart ausgestaltet ist, dass ein erstes (402) und ein zweites Telefon (403) direkt mit der Kalibriereinrichtung verbindbar sind, und wobei ein Signalverarbeitungsmittel zum Verarbeiten eines Audiosignals aus der Eingabe über das Freisprechsystem und zur telefonischen Übertragung durch das zweite Telefon vorgesehen ist, umfassend:
Veranlassungsmittel zum Veranlassen, dass das zweite Telefon (403) ein vorbestimmtes digitales Testsignal an das erste Telefon (402) über eine Telefonverbindung überträgt,
Verbindungsmittel (408) zum Vergleichen des empfangenen digitalen Testsignals mit einem vorbestimmten digitalen Bezugssignal zur Bestimmung einer Abweichung des empfangenen digitalen Testsignals von dem digitalen Bezugssignal, wobei das empfangene digitale Testsignal von dem ersten Telefon empfangen worden ist, und
Anpassmittel zum Anpassen des Signalverarbeitungsmittels auf Grundlage der vorbestimmten Abweichung.

19. Telefonfreisprechsystem, umfassend eine Kalibriereinrichtung nach Anspruch 17 oder 18.

20. Telefonfreisprechsystem nach Anspruch 19, wobei das erste Telefon in das Freisprechsystem integriert ist.

## Revendications

1. Procédé d'étalonnage automatique d'un système de téléphone mains libres par un appareil d'étalonnage (201), dans lequel un moyen de traitement de signal (207) permettant de traiter un signal téléphonique reçu (101) à produire en sortie via le système mains libres est prévu, et dans lequel l'appareil d'étalonnage est configuré de telle sorte qu'un premier (202) et un second (203) téléphone peuvent être directement connectés à l'appareil d'étalonnage, comprenant les étapes :
d'amenée du premier téléphone (202) à transmettre un signal d'essai numérique prédéterminé au second téléphone (203) via une connexion téléphonique,
de comparaison du signal d'essai numérique reçu avec un signal de référence numérique prédéterminé pour déterminer un écart du signal d'essai numérique reçu par rapport au signal de référence numérique, le signal d'essai numérique reçu ayant été reçu par le second téléphone et devant être transmis au système mains libres, et
d'adaptation du moyen de traitement de signal à partir de l'écart déterminé.

2. Procédé selon la revendication 1, dans lequel le premier téléphone est intégré dans le système mains libres.

3. Procédé selon l'une des revendications précédentes, dans lequel le signal d'essai et/ou le signal de référence est/sont stocké(s) dans l'appareil d'étalonnage et/ou dans le système mains libres.

4. Procédé selon l'une des revendications précédentes, dans lequel le signal d'essai est un signal variant dans le temps, en particulier un signal non stationnaire.

5. Procédé selon l'une des revendications précédentes, dans lequel le signal d'essai est un signal de source composite, un signal de voix artificielle ou une séquence de pseudo-bruit.

6. Procédé selon l'une des revendications précédentes, dans lequel le signal d'essai et le signal de référence sont identiques.

7. Procédé selon l'une des revendications précédentes, dans lequel l'étape de comparaison comprend la réalisation d'une analyse de corrélation basée sur le signal d'essai reçu et le signal de référence.

8. Procédé selon l'une des revendications précédentes, dans lequel le moyen de traitement du signal comprend un moyen d'égalisation et l'étape d'adaptation comprend l'adaptation du moyen d'égalisation.

9. Procédé selon l'une des revendications précédentes, dans lequel l'étape d'adaptation comprend l'adaptation d'un paramètre de commande de niveau du moyen de traitement de signal.

10. Procédé selon l'une des revendications précédentes, dans lequel l'étape d'adaptation comprend l'adaptation d'une réponse de fréquence du moyen de traitement de signal.

11. Procédé selon l'une des revendications précédentes, dans lequel l'étape d'adaptation comprend l'adaptation d'une commande d'amplification automatique du moyen de traitement de signal.

12. Procédé selon l'une des revendications précédentes, dans lequel l'étape d'adaptation comprend l'adaptation d'un limiteur ou un moyen de suppression de bruit du moyen de traitement de signal.

13. Procédé selon l'une des revendications précédentes, comprenant l'étape de réalisation d'une extension de largeur de bande d'un signal téléphone reçu.

14. Procédé selon l'une des revendications précédentes, dans lequel le premier et/ou le second téléphone est/sont connecté(s) sans fil ou de manière filaire au système mains libres.

15. Procédé d'étalonnage automatique d'un système de téléphone mains libres par un appareil d'étalonnage (401), en particulier selon l'une des revendications précédentes, dans lequel l'appareil d'étalonnage (401) est configuré de telle sorte qu'un premier (402) et un second (403) téléphone peuvent être directement connectés à l'appareil d'étalonnage, et dans lequel un moyen de traitement du signal (407) permettant de traiter une entrée de signal audio via le système mains libres et à transmettre téléphoniquement par le second téléphone est prévu, comprenant les étapes :
d'amenée du second téléphone (403) à transmettre un signal d'essai numérique prédéterminé au premier téléphone (402) via une connexion téléphonique,
de comparaison du signal d'essai numérique reçu avec un signal de référence numérique prédéterminé pour déterminer un écart du signal d'essai numérique reçu par rapport au signal de référence numérique, le signal d'essai numérique reçu ayant été reçu par le premier téléphone, et
d'adaptation du moyen de traitement de signal à partir de l'écart déterminé.

16. Produit de programme informatique comprenant un ou plusieurs supports lisibles par ordinateur comportant des instructions exécutables par ordinateur pour effectuer les étapes du procédé de l'une des revendications précédentes, lors d'une exploitation sur un ordinateur.

17. Appareil d'étalonnage (201) permettant d'étalonner automatiquement un système de téléphone mains libres, dans lequel un moyen de traitement de signal (207) permettant de traiter un signal téléphonique reçu à produire en sortie via un système mains libres est prévu, et dans lequel l'appareil d'étalonnage est configuré de telle sorte qu'un premier (202) et un second (203) téléphone peuvent être directement connectés à l'appareil d'étalonnage, comprenant :
un moyen causal permettant d'amener le premier téléphone (202) à envoyer un signal d'essai numérique prédéterminé au second téléphone (203) via une connexion téléphonique,
un moyen de comparaison (206) permettant de comparer le signal d'essai numérique reçu avec un signal de référence numérique prédéterminé pour déterminer un écart du signal d'essai numérique reçu par rapport au signal de référence numérique, le signal d'essai numérique reçu ayant été reçu par le second téléphone et devant être transmis au système mains libres, et
un moyen d'adaptation permettant d'adapter le moyen de traitement de signal à partir de l'écart déterminé.

18. Appareil d'étalonnage (401) permettant d'étalonner automatiquement un système de téléphone mains libres, par un appareil d'étalonnage, par exemple selon l'une des revendications précédentes, dans lequel l'appareil d'étalonnage est configuré de telle sorte qu'un premier (402) et un second (403) téléphone peuvent être directement connectés à l'appareil d'étalonnage, et dans lequel un moyen de traitement du signal permettant de traiter une entrée de signal audio via le système mains libres et à transmettre téléphoniquement par le second téléphone est prévu, comprenant :
un moyen causal permettant d'amener le second téléphone (403) à transmettre un signal d'essai numérique prédéterminé au premier téléphone (402) via une connexion téléphonique,
un moyen de comparaison (408) permettant de comparer le signal d'essai numérique reçu avec un signal de référence numérique prédéterminé pour déterminer un écart du signal d'essai numérique reçu par rapport au signal de référence numérique, le signal d'essai numérique reçu ayant été reçu par le premier téléphone, et
un moyen d'adaptation permettant d'adapter le moyen de traitement de signal à partir de l'écart déterminé.

19. Système de téléphone mains libres comprenant un appareil d'étalonnage selon la revendication 17 ou 18.

20. Système de téléphone mains libres selon la revendication 19, dans lequel le premier téléphone est intégré dans le système mains libres.
